# EUROPÄISCHE PATENTSCHRIFT

(11) **EP 1 523 834 B1**
(45) Veröffentlichungstag und Bekanntmachung des Hinweises auf die Patenterteilung: **03.10.2012**
(21) Anmeldenummer: 03787591.1
(22) Anmeldetag: 11.06.2003
(51) Int. Cl.: H04W 8/20

(54) **VERFAHREN UND DATENSYSTEM ZUM ANBINDEN EINES DRAHTLOSEN LOKALEN NETZWERKS AN EINE UMTS-ENDSTATION**
METHOD AND DATA SYSTEM FOR CONNECTING A WIRELESS LOCAL NETWORK TO A UMTS TERMINAL STATION
PROCEDE ET SYSTEME DE DONNEES POUR RELIER UN RESEAU LOCAL SANS FIL A UNE STATION TERMINALE

(30) Priorität: 24.07.2002 DE 10233606
(43) Veröffentlichungstag der Anmeldung: 20.04.2005
(73) Patentinhaber: SIEMENS AKTIENGESELLSCHAFT, 80333 München (DE)
(72) Erfinder: BECKMANN, Mark, 38124 Braunschweig (DE); CHOI, Hyung, Nam, 22117 Hamburg (DE); VAN NIEKERK, Sabine, 38228 Salzgitter (DE)
(86) Internationale Anmeldenummer: PCT/DE2003/001944
(87) Internationale Veröffentlichungsnummer: WO 2004/017566

(56) Entgegenhaltungen:
- EP-A- 1 241 841
- WO-A-00/51375
- WO-A-01/58190
- WO-A-02/09458
- WO-A-03/037023
- ETSI: "Digital cellular telecommunications system (Phase 2+) (GSM); Universal Mobile Telecommunications System (UMTS); USIM Application Toolkit (USAT) (3GPP TS 31.111 version 4.5.0 Release 4)" ETSI TS 131 111 V4.5.0 (2001-12), Dezember 2001 (2001-12), Seiten 1-158, XP002258929 France in der Anmeldung erwähnt

## Beschreibung

Die vorliegende Erfindung betrifft ein Verfahren und ein Datensystem zum Anbinden eines drahtlosen lokalen Netzwerks an eine UMTS-Endstation.

Drahtlose Netzwerke, sogenannte WLANs (Wireless Local Area Network), werden immer öfter in kleinen, lokalen Bereichen, sogenannten "Hot-Spots", wie beispielsweise Flughäfen, Hotels oder ähnlichen Gebieten mit großer Teilnehmerdichte installiert. Aufgrund der technischen Möglichkeiten von WLAN ist es wünschenswert, diese Technologie als Ergänzung zu Mobilfunksystemen der dritten Generation, wie beispielsweise UMTS (Universal Mobile Telecommunications System) zu nutzen.

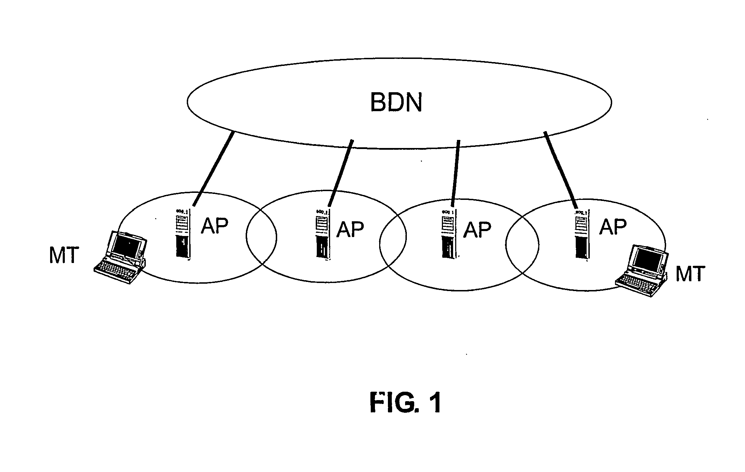

Figur 1 zeigt schematisch das Grundprinzip einer WLAN-Netzwerkarchitektur. Es ist darin ein drahtloses lokales Kommunikationsnetz dargestellt, in welchem Mobilstationen MTs (Mobile Terminal) per Funk über mehrere Zugangsknoten APs (Access Point) mit einem Breitband-Datennetz BDN (Broadband Data Network) verbunden sind. Bei den Zugangsknoten AP handelt es sich um WLAN-Basisstationen. Jeder Zugangsknoten AP versorgt alle in einer Zelle befindlichen Mobilstationen MT. Dabei kann die Zellengröße maximal bis zu einigen hundert Metern betragen. Prinzipiell kann mit WLAN ein zellulares Funknetz aufgebaut werden, in dem bei Bewegung der Mobilstationen MT eine bestehende Datenverbindung von Zugangsknoten zu Zugangsknoten übergeben werden kann. Dies ist im Mobilfunk allgemein als "Roaming" bekannt. Die maximalen Datenraten sind abhängig von der jeweiligen WLAN-Technologie und können bis zu 54 Mbit/s betragen.

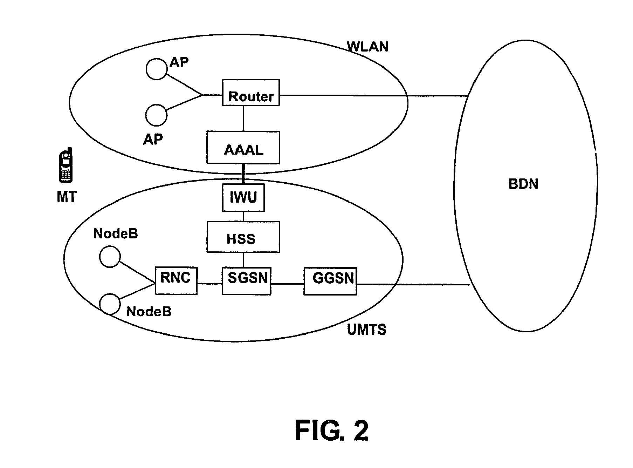

Für eine Anbindung eines WLAN in UMTS ist eine Architektur bekannt, bei der WLAN und UMTS eigenständige Systeme darstellen, welche über eine Zusammenarbeits-Einheit IWU (Interworking-Unit) miteinander verbunden sind. Figur 2 zeigt schematisch diese bekannte Netzwerkarchitektur. Die Aufgabe des Elements IWU ist die Umsetzung von Signalisierungs- und Nutzerdaten von WLAN zu UMTS und umgekehrt. Das WLAN ist mit den Elementen AP, Router und AAAL dargestellt. Bei den APs handelt es sich wiederum um Zugangsknoten, der Router ist ein vermittelnder Rechner und der AAAL (Authentication Authorization Accounting Local) ein lokaler Rechner, welcher zur Authentifizierung, Autorisierung und Abrechnung eingesetzt wird. Die Netzarchitektur von UMTS ist mit den Elementen NodeB, RNC, SGSN, GGSN und HSS dargestellt. Bei der NodeB handelt es sich um eine UMTS-Basisstation, der RNC (Radio Network Controller) ist ein Funk-Netzwerk-Steuerungselement, SGSN (Serving GPRS Support Node) und GGSN (Gateway GPRS Support Node) sind GPRS-Unterstützungsknoten und der HSS (Home Subscriber Server) ein lokaler Teilnehmerrechner. Bei GPRS (General Packet Radio Service) handelt es sich um einen Mobilfunk-Standard, bei dem nicht für jeden Teilnehmer eine dedizierte Datenverbindung aufgebaut, sondern die Gesamtmenge der zur Verfügung stehenden Übertragungsressourcen nach Bedarf den einzelnen Teilnehmern zugeteilt, und die Daten paketweise übertragen werden.

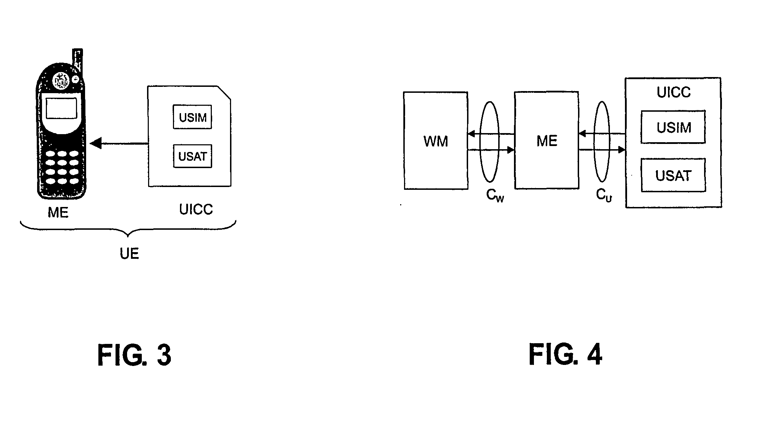

Im UMTS besteht die eigentliche Endstation, dort als Nutzereinrichtung UE (User Equipment) bezeichnet, aus der Mobileinrichtung ME (Mobile Equipment) und der physikalischen Chipkarte UICC (Universal Integrated Circuit Card). Figur 3 zeigt schematisch den entsprechenden Aufbau einer Nutzereinrichtung UE. Auf der UICC ist standardmäßig das USIM (Universal Subscriber Identity Module) zusammen mit der USAT-Funktionalität (USIM Application Toolkit) implementiert. Das USIM entspricht der SIM (Subscriber Identity Module) im Mobilfunkstandard der zweiten Generation GSM (Global System for Mobile Communications). Das USIM ermöglicht einem Mobilfunkteilnehmer, sein ME in einem UMTS-Funknetz zu nutzen. Auf dem USIM sind alle wichtigen Daten des Teilnehmer-Anschlusses gespeichert, die zur Identifizierung und zum Nachweis der Zugangsberechtigung, das heißt Authentifizierung, des Mobilfunkteilnehmers dienen sowie die Ver- und Entschlüsselung der Nutzerdaten zum Schutz gegen Abhören und Verfälschen gewährleisten. Mit der USAT-Funktionalität besteht die Möglichkeit, das ME über das UMTS-Funknetz direkt zu konfigurieren. Die technische Spezifikation TS 31.111 Version 4.5.0 (2001-12) "USIM Application Toolkit (USAT)" des 3rd Generation Partnership Projects (3GPP) behandelt die Schnittstelle zwischen dem ME und der UICC und umfasst im Wesentlichen eine Liste von Kommandos, welche das ME interaktiv mit der UICC umsetzen kann.

Bei der gewünschten Anbindung von WLAN in UMTS besteht jedoch das Problem, das auf Grund der nicht ständigen Verfügbarkeit des WLAN ein oftmaliger Verbindungsaufbau bzw. -abbau erfolgen muss. Bekannte Prozeduren bringen einen hohen Signalisierungsaufwand mit sich oder gewährleisten oft keinen zuverlässigen Verbindungsaufbau bzw. -abbau. Darüber hinaus sollte auf Grund der Standardisierung USIM/USAT in UMTS, eine bestehende Datenverbindung im WLAN vom USIM/USAT der UMTS-Endstation kontrolliert werden. Eine Realisierung einer entsprechenden Steuerung ist bisher jedoch nicht bekannt.

Aus der WO-A-01/58190 ist ein Verfahren bekannt, welches einem mobilen Endgerät die Auswahl zwischen mehreren Mobilfunknetzen unterschiedlicher Standards wie GSM, GPRS, WLAN und anderen, ermöglicht. Das Endgerät ist hierfür in der Lage mit den unterschiedlichen Netzen zu kommunizieren, wobei dies in der Reihenfolge gemäß einer Prioritätsliste erfolgt und wobei, insbesondere bei Abbruch der Kommunikation, versucht wird stets eine Verbindung mit dem Netz, welches die höchste Priorität aufweist, herzustellen.

Somit liegt der vorliegenden Erfindung die Aufgabe zugrunde, ein Verfahren und ein Datensystem zum Anbinden eines drahtlosen lokalen Netzwerks an eine UMTS-Endstation mit USIM/USAT-Funtionalität bereitzustellen, welche einen Austausch von WLAN-spezifischen Daten zwischen einer UMTS-Endstation und UICC ermöglicht und darüber hinaus einen zuverlässigen Verbindungsaufbau bzw. -abbau gewährleistet.

Diese Aufgabe wird erfindungsgemäß durch ein Verfahren zum Anbinden eines drahtlosen lokalen Netzwerks an eine UMTS-Endstation mit USIM/USAT-Funktionalität mit den Merkmalen des Anspruchs 1 und ein Datensystem zum Anbinden eines drahtlosen lokalen Netzwerks an eine UMTS-Endstation mit den Merkmalen des Anspruchs 8 gelöst. Des weiteren stellt eine Endstation mit den Merkmalen des Anspruchs 15 eine Lösung der Aufgabe dar. Die Unteransprüche definieren jeweils bevorzugte und vorteilhafte Ausführungsformen der vorliegenden Erfindung.

Das erfindungsgemäße Verfahren zum Anbinden eines drahtlosen lokalen Netzwerks an eine UMTS-Endstation mit USIM/USAT-Funktionalität weist die Verfahrensschritte
- Überwachen der Aktivität des lokalen Netzwerks durch die Endstation,
- Übermitteln des Typs und/oder der Identitätsnummer des lokalen Netzwerks an die Endstation nach erfolgreich detektierter Aktivität des lokalen Netzwerks, - Starten einer logischen Verbindung zwischen dem lokalen Netzwerk und der Endstation, und
- Abfragen der spezifischen Teilnehmerdaten des lokalen Netzwerks
auf. Bei dem drahtlosen lokalen Netzwerk handelt es sich bevorzugt um WLAN-Technologien, welche einen breitbandigen Funkzugang zu Breitband-Datennetzen ermöglichen. Weiter bevorzugt basieren das drahtlose lokale Netzwerk auf dem TCP/IP (Transmission Control Protocol/Internet Protocol), ATM- (A-synchrounus Transfer Modus), oder B-ISDN- (Broadband Integrated Services Digital Network)-Standard. Beispiele für Breitband-WLAN-Technologien sind IEEE 802.11, Hiperlan/2, Openair oder SWAP. WLAN wird vorliegend als Synonym für sämtliche Breitband-WLAN-Technologien verwendet.

In einer Weiterbildung der vorliegenden Erfindung wird in periodischen Abständen der temporäre Status des lokalen Netzwerks und/oder spezifische Teilnehmerdaten des lokalen Netzwerks abgefragt. Entsprechende Abfragen erfolgen bevorzugt während einer bestehenden WLAN-Verbindung.

In einer bevorzugten Ausführungsform enthalten die spezifischen Teilnehmerdaten die Daten Typ-/Identitätsnummer, Teilnehmer-Identifikation, Passwort, geheimer Schlüssel zur Ver- und Entschlüsselung von Daten und Adresse eines Zugangsknotens. Des Weiteren ist denkbar, dass die WLAN-spezifischen Daten des Teilnehmer-Anschlusses, die zur Identifizierung und Authentifizierung des Mobilfunkteilnehmers dienen sowie die Ver- und Entschlüsselung der Nutzer-Daten zum Schutz gegen Abhören und Verfälschen gewährleisten auf der physikalischen Chipkarte UICC der UMTS-Endstation gespeichert werden. Beispielsweise können zur Kontrolle des Verbindungsaufbaus bzw. -abbaus einer bestehenden Datenverbindung im WLAN die WLAN-spezifischen Daten des Teilnehmer-Anschlusses in der UMTS-Endstation vom UICC angefragt und gespeichert werden.

In einer Weiterbildung der vorliegenden Erfindung wird das Überwachen der Aktivität des lokalen Netzwerks und die Übermittlung der Daten an die Endstation durch eine universelle Chipkarte, die sich in dem Endgerät befindet, initiiert. Bevorzugt handelt es sich bei der universellen Chipkarte um die UICC. Des Weiteren bevorzugt teilt die universelle Chipkarte der Endstation eine Deaktivierung des lokalen Netzwerks mit.

In einer Weiterbildung der vorliegenden Erfindung initiiert die universelle Chipkarte einen Abbau der logischen Verbindung zwischen dem lokalen Netzwerk und der Endstation. Des Weiteren bevorzugt quittiert die Endstation sämtliche übermittelte Daten. Mit einer solchen Quittierung können zusätzlich weitere Informationen übertragen werden.

Die vorstehend erwähnte Aufgabe wird des Weiteren durch ein Datensystem zum Anbinden eines drahtlosen lokalen Netzwerks an eine UMTS-Endstation gelöst. Das Datensystem weist
- ein lokales Netzwerk,
- eine UMTS-Endstation mit USIM/USAT-Funktionalität, welche geeignet ist, mit dem lokalen Netzwerk in Verbindung zu treten,
- Mittel zum Überwachen der Aktivität des lokalen Netzwerks, wobei sich die Mittel in der Endstation befinden,
- Mittel zum Senden des Typs und/oder der Identitätsnummer des lokalen Netzwerks an die Endstation, wobei das Senden nach erfolgreich detektierter Aktivität des lokalen Netzwerks erfolgt,
- Mittel zum Starten einer logischen Verbindung zwischen dem lokalen Netzwerk und der Endstation, und
- Mittel zum Abfragen der spezifischen Teilnehmerdaten des lokalen Netzwerks, auf.

Die Aufgabe wird auch durch eine Endstation, insbesondere ein Mobilfunk-Endgerät, zur Verwendung in einem erfindungsgemäßen Verfahren und/oder zur Verwendung in einem erfindungsgemäßen Datensystem gelöst.

Die Erfindung wird im Folgenden unter Hinweis auf die beigefügten Zeichnungen anhand von Ausführungsbeispielen näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigen:
- Figur 1: eine schematische Darstellung einer WLAN -Netzwerkarchitektur;
- Figur 2: eine schematische Darstellung einer UMTS-/WLAN-Netzwerkarchitektur;
- Figur 3: eine schematische Darstellung eines Mobilfunk-Endgeräts mit einer UICC-Karte;
- Figur 4: eine schematische Darstellung einer UMTS-Nutzereinheit; und
- Figur 5: ein Ausführungsbeispiel eines Informationsflusses zwischen UICC und ME.

Die Figuren 1 bis 3 wurden bereits in der Einleitung der Beschreibung erläutert, so dass auf die entsprechenden Ausführungen verwiesen wird.

Figur 4 zeigt eine schematische Darstellung einer UMTS Nutzereinheit. Die physikalische Chipkarte UICC (Universal Integrated Circuit Card) beinhaltet USIM und USAT. Die UICC ist über eine Kommunikations-Schnittstelle C_{U} mit der mobilen Einrichtung ME verbunden. Diese steht wiederum über die Kommunikations-Schnittstelle C_{W} mit einem WLAN-Modul WM in Verbindung. In der UMTS-Einheit kann die hardwaremäßige WLAN-Anbindung durch ein entsprechendes Modul in der Form realisiert werden, dass das Modul entweder als WLAN-Funkteil bereits mitintegriert wird oder als WLAN-PC-Karte in die entsprechende Schnittstelle der Station, beispielsweise in Form einer PCMCIA- (Personal Computer Memory Card International Association) Schnittstelle eingeschoben werden kann.

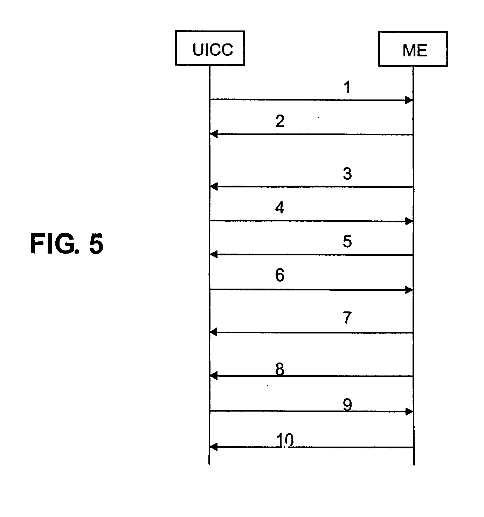

Figur 5 zeigt ein Ausführungsbeispiel eines Informationsflusses zwischen einer physikalisschen Chipkarte UICC und einer mobilen Einrichtung ME. Es wird dabei angenommen, dass sich ein Mobilfunkteilnehmer an einem Ort befindet, an dem er Zugriff auf ein UMTS- und ein WLAN-Funknetz hat. Sein Mobilfunk-Endgerät besteht aus den Komponenten UICC, ME sowie WM (vergleiche Figuren 3 und 4). Es wird des Weiteren angenommen, dass eine Netzwerkarchitektur mit Verbindung von WLAN und UMTS gemäß Figur 2 vorhanden ist. Ferner wird angenommen, dass der Teilnehmer mit seiner UMTS-Endstation im UMTS-Netz eingebucht ist und per WLAN basierend auf der IEEE 802.11-Technologie eine Internet-Verbindung aufbauen will. Dazu muss sich der Teilnehmer gegenüber dem WLAN-Netz vorher identifizieren und authentifizieren. Dies tut er, indem er in ein entsprechendes Eingabemenue seiner Endstation seinen Namen zur Teilnehmer-Identifikation sowie sein Passwort zur Authentifikation eingibt. Dies wird vom WLAN-Modul WM registriert, und im Falle einer korrekten Eingabe kann der Teilnehmer nun eine Internet-Verbindung per WLAN aufbauen.

Zur Kontrolle des Verbindungsaufbaus und -abbaus sowie einer bestehenden Datenverbindung im WLAN werden die WLAN-spezifischen Teilnehmerdaten vom UICC angefragt und gespeichert. Figur 5 zeigt ein Ausführungsbeispiel des entsprechenden Informationsflusses zwischen UICC und ME. Hierbei wird vorausgesetzt, dass die Schnittstelle C_{W} gemäß Figur 4 so implementiert ist, dass diese den Informationsfluss über die Schnittstelle C_{U} entsprechend unterstützt.

In dem in Figur 5 gezeigten Schritt 1 beauftragt die UICC die ME, auf den Status "Aktiv" des WLAN-Moduls WM zu achten. Als Antwort 2 darauf sendet die ME eine positive Empfangsbestätigung. Nach Eintreten des Ereignisses, d.h. der Aktivierung des WLAN-Moduls WM in Folge eines Verbindungsaufbaus, sendet die ME eine Antwort 3 mit den gesetzten Parametern "Status = Aktiv", "WLAN-Typ/Identitätsnummer = IEEE 802.11" an die UICC. Bevor die eigentliche Abfrage der WLAN-spezifischen Teilnehmerdaten erfolgen kann, wird eine logische Verbindung gestartet. Dies wird von der UICC mit der Anfrage 4 und dem gesetzten Parameter "WLAN-Typ/Identitätsnummer = IEEE 802.11" an die ME realisiert. Als Antwort 5 teilt die ME mit den gesetzten Parametern "Status = OK" und "WLAN-Typ/Identitätsnummer = IEEE 802.11" der UICC mit, als Bestätigung, dass die Anfrage ausgeführt wurde. Mit der Anfrage 6 befragt sodann die UICC die ME nach den Teilnehmerdaten des WLAN-Moduls. Die ME antwortet 7 mit den entsprechenden Informationen WLAN-Typ/Identitätsnummer, Teilnehmer-Identifikation, Passwort, Geheimschlüssel zur Ver- und Entschlüsselung von Daten und Internet-Protokoll-Adresse des Zugangsknotens AP. Im Falle des Verbindungsabbaus, das heißt der Deaktivierung des WLAN-Moduls, sendet die ME an die UICC eine Antwort 8 mit den gesetzten Parametern "Status = Nicht Aktiv", WLAN-Typ/Identitätsnummer = IEEE 802.11". Zur Beendigung der logischen Verbindung sendet die UICC das Kommando 9 mit dem gesetzten Parameter "WLAN-Typ/Identitätsnummer = IEEE 802.11" an die ME. Mit der Antwort 10 und dem Statusfeld "OK" teilt die ME schließlich der UICC mit, dass die Anfrage ausgeführt und die logische Verbindung beendet wurde.

Während einer bestehenden WLAN-Verbindung, d.h. zwischen den Schritten 7 und 8, ist es auch denkbar, dass die UICC in periodischen Abständen den temporären Status des WLAN-Moduls bzw. die WLAN-spezifischen Teilnehmerdaten abfragt.

Bei dem Ausführungsbeispiel wurde vorausgesetzt, dass die Schnittstelle C_{W} bereits so gestaltet ist, dass diese den Datenaustausch über die Schnittstelle C_{U} unterstützen kann (vergleiche Figur 4). Zur Realisierung des Datenaustausches über die Schnittstelle C_{U} zwischen UICC und ME werden sechs USAT-Kommandos definiert:

Anfrage des WLAN-Status: Mit diesem Kommando kann die UICC die ME nach dem Status, beispielsweise "Aktiv" oder "Nicht Aktiv" sowie Typ bzw. Identitätsnummer des WLAN-Moduls, beispielsweise IEEE 802.11 oder Hiperlan/2 befragen. Als Antwort hierauf soll die ME die entsprechenden Informationen über das Kommando "Endstation Antwort" an die UICC senden. Dieses Kommando weist die Parameter Status, WLAN-Typ/Identitätsnummer auf.

Anfrage WLAN-Information: Mit diesem Kommando kann die UICC die ME nach den WLAN-spezifischen Teilnehmerdaten des WLAN-Moduls befragen. Als Antwort hierauf soll die ME die entsprechenden Informationen über das Kommando "Endstation Antwort" an die UICC senden. Dieses Kommando umfasst die Parameter WLAN-Typ/Identitätsnummer, Teilnehmer-Identifikation, Passwort, geheimer Schlüssel zur Ver- und Entschlüsselung von Daten, Internetprotokoll-Adresse des Zugangsknotens AP. Dieses Kommando entspricht Schritt 6 in Figur 5.

WLAN Anschalten: Mit diesem Kommando kann die UICC die ME anweisen, eine logische Verbindung mit dem WLAN-Modul zu starten. Als Antwort hierauf soll die ME über das Kommando "Endstation Antwort" der UICC mitteilen, ob die Anfrage ausgeführt werden konnte oder nicht. Dieses Kommando weist die Parameter WLAN-Typ/Identitätsnummer auf und entspricht Schritt 4 in Figur 5.

WLAN Ausschalten: Mit diesem Kommando weist die UICC die ME an, eine logische Verbindung mit dem WLAN-Modul zu beenden. Als Antwort hierauf soll die ME über das Kommando "Endstation Antwort" der UICC mitteilen, ob die Anfrage ausgeführt werden konnte oder nicht. Dieses Kommando weist den Parameter WLAN-Typ/Identitätsnummer auf und entspricht Schritt 9 in Figur 5.

Aufbau einer Ereignisliste: Mit diesem Kommando weist die UICC die ME an, auf den Status des WLAN-Moduls, beispielsweise "Aktiv" zu achten. Als direkte Antwort hierauf soll die ME eine "Endstation Antwort" mit "Akzeptiert" oder "Nicht Akzeptiert" zur Bestätigung des Kommandos an die UICC senden. Beim Eintreten des Ereignisses, d.h. im Fall der Aktivierung des WLAN-Moduls, soll die ME die entsprechende Information über das Kommando "Endstation Antwort" an die UICC senden. Bei diesem Kommando werden in die bereits bestehenden Parameterliste, d.h. Ereignisliste, die WLAN-spezifischen Status-Parameter hinzugefügt. Dieses Kommando entspricht Schritt 1 in Figur 5.

Endstation Antwort: Es handelt es sich um ein Kommando, mit welchem die ME auf die Anfragen der UICC über die vorstehend definierten WLAN-spezifischen Kommandos entsprechend antworten soll. Dabei werden der bereits bestehenden Parameterliste die WLAN-spezifischen Parameter, d.h. Status, WLAN-Typ/Identitätsnummer, Teilnehmer-Identifikation, Passwort, geheimer Schlüssel zur Ver- und Entschlüsselung von Daten und Internetprotokoll-Adresse des Zugangsknotens AP, hinzugefügt. Dieses Kommando entspricht den Schritten 2, 3, 5, 7, 8 und 10 in Figur 5.

Die nachfolgend dargestellte Tabelle zeigt zusammenfassend die Liste der neuen Kommandos mit Parameter, Quelle und Ziel:

| Kommando | Parameter | | Quelle | Ziel |
|---|---|---|---|---|
| Anfrage des WLAN-Status | - | Status | UICC | ME |
| | - | WLAN-Typ/-Identitätsnummer | | |
| Anfrage WLAN-Information | - | WLAN-Typ/-Identitätsnummer | UICC | ME |
| | - | Teilnehmer-Identifikation | | |
| | - | Passwort | | |
| | - | Geheimer Schlüssel zur Ver- und Entschlüsselung von Daten | | |
| | - | IP-Adresse der AP | | |
| WLAN Anschalten | - | WLAN-Typ/-Identitätsnummer | UICC | ME |
| WLAN Ausschalten | - | WLAN-Typ/-Identitätsnummer | UICC | ME |
| Aufbau einer Ereignisliste | - | Status | UICC | ME |
| Endstation Antwort | - | Status | ME | UICC |
| | - | WLAN-Typ/-Identitätsnummer | | |
| | - | Teilnehmer-Identifikation | | |
| | - | Passwort | | |
| | - | Geheimer Schlüssel zur Ver- und Entschlüsselung von Daten | | |
| | - | IP-Adresse der AP | | |

## Patentansprüche

1. Verfahren zum Anbinden eines drahtlosen lokalen Netzwerks (WLAN) an eine UMTS-Endstation (ME) mit USIM/USAT-Funktionalität, aufweisend die Verfahrensschritte:
- Überwachen der Aktivität des lokalen Netzwerkes durch die Endstation,
- Übermitteln des Typs und/oder der Identitätsnummer des lokalen Netzwerks an die Endstation nach erfolgreich detektierter Aktivität des lokalen Netzwerkes,
- Starten einer logischen Verbindung zwischen dem lokalen Netzwerk und der Endstation, und
- Abfragen der spezifischen Teilnehmerdaten des lokalen Netzwerks.

2. Verfahren gemäß Anspruch 1,
**dadurch gekennzeichnet, dass** in periodischen Abständen der temporäre Status des lokalen Netzwerks und/öder spezifische Teilnehmerdaten des lokalen Netzwerks abgefragt werden.

3. Verfahren gemäß einem der vorhergehenden Ansprüche,
**dadurch gekennzeichnet, dass** die spezifischen Teilnehmerdaten die Daten Typ-/Identitätsnummer, Teilnehmer-Identifikation, Passwort, geheimer Schlüssel zur Ver- und Entschlüsselung von Daten, und Adresse eines Zugangsknotens enthalten.

4. Verfahren gemäß einem der vorhergehenden Ansprüche,
**dadurch gekennzeichnet, dass** das Überwachen der Aktivität des lokalen Netzwerkes und die Übermittlung der Daten an die Endstation durch eine universelle Chipkarte (UICC), die sich in dem Endgerät befindet, initiiert wird.

5. Verfahren gemäß Anspruch 4,
**dadurch gekennzeichnet, dass** die Endstation der universellen Chipkarte (UICC) eine Deaktivierung des lokalen Netzwerks mitteilt.

6. Verfahren gemäß Anspruch 5,
**dadurch gekennzeichnet, dass** die universelle Chipkarte (UICC) einen Abbau der logischen Verbindung zwischen lokalen Netzwerk und Endstation initiiert.

7. Verfahren gemäß einem der vorhergehenden Ansprüche,
**dadurch gekennzeichnet, dass** die Endstation sämtliche übermittelte Daten quittiert.

8. Datensystem zum Anbinden eines drahtlosen lokalen Netzwerks an eine UMTS-Endstation, aufweisend:
- ein lokales Netzwerk (WLAN);
- eine UMTS-Endstation (ME) mit USIM/USAT-Funktionalität, welche geeignet ist, mit dem lokalen Netzwerk in Verbindung zu treten;
- Mittel zum Überwachen der Aktivität des lokalen Netzwerks, wobei sich die Mittel in der Endstation befinden,
- Mittel zum Senden des Typs und/oder der Identitätsnummer des lokalen Netzwerks an die Endstation, wobei das Senden nach erfolgreich detektierter Aktivität des lokalen Netzwerks erfolgt,
- Mittel zum Starten einer logischen Verbindung zwischen dem lokalen Netzwerk und der Endstation, und
- Mittel zum Abfragen der spezifischen Teilnehmerdaten des lokalen Netzwerks.

9. Datensystem gemäß Anspruch 8,
**dadurch gekennzeichnet, dass** die Endstation geeignet ist, in periodischen Abständen den temporären Status des lokalen Netzwerks und/oder spezifische Teilnehmerdaten des lokalen Netzwerks abzufragen.

10. Datensystem gemäß einem der Ansprüche 8 oder 9,
**dadurch gekennzeichnet, dass** die spezifischen Teilnehmerdaten die Daten Typ-/Identitätsnummer, Teilnehmer-Identifikation, Passwort, geheimer Schlüssel zur Ver- und Entschlüsselung von Daten, und Adresse eines Zugangsknotens enthalten.

11. Datensystem gemäß einem der Ansprüche 8 bis 10,
**dadurch gekennzeichnet, dass** die Endstation eine universelle Chipkarte (UICC) aufweist, welche das Überwachen der Aktivität des lokalen Netzwerkes und die Übermittlung der Daten an die Endstation initiiert.

12. Datensystem gemäß Anspruch 11,
**dadurch gekennzeichnet, dass** die Endstation geeignet ist, der universellen Chipkarte (UICC) eine Deaktivierung des lokalen Netzwerks mitzuteilen.

13. Datensystem gemäß Anspruch 12,
**dadurch gekennzeichnet, dass** die universelle Chipkarte (UICC) geeignet ist, einen Abbau der logischen Verbindung zwischen lokalen Netzwerk und Endstation zu initiieren.

14. Datensystem gemäß einem der Ansprüche 8 bis 13,
**dadurch gekennzeichnet, dass** die Endstation geeignet ist, sämtliche übermittelte Daten zu quittieren.

15. Endstation, insbesondere Mobilfunk-Endgerät, zur Verwendung mit einem Verfahren nach einem der Ansprüche 1 bis 7 oder zur Verwendung in einem Datensystem nach einem der Ansprüche 8 bis 14.

## Claims

1. Method for connecting a wireless local area network (WLAN) to a UMTS terminal (ME) having USIM/USAT functionality, comprising the method steps of:
- monitoring the activity of the local area network by the terminal,
- transmitting the type and/or the identity number of the local area network to the terminal following successful detection of local area network activity,
- initiating a logical connection between the local area network and the terminal, and
- polling the specific subscriber data of the local area network.

2. Method according to claim 1,
**characterised in that**
the temporary status of the local area network and/or specific subscriber data of the local area network are/is polled at periodic intervals.

3. Method according to one of the preceding claims,
**characterised in that**
the specific subscriber data includes the data: type/identity number, subscriber identification, password, secret key for encrypting and decrypting data, and address of an access node.

4. Method according to one of the preceding claims,
**characterised in that**
the monitoring of the activity of the local area network and the transmission of the data to the terminal is initiated by means of a universal chip card (UICC) which is contained in the terminal device.

5. Method according to claim 4,
**characterised in that**
the terminal notifies the universal chip card (UICC) of a deactivation of the local area network.

6. Method according to claim 5,
**characterised in that**
the universal chip card (UICC) initiates a cleardown of the logical connection between local area network and terminal.

7. Method according to one of the preceding claims,
**characterised in that**
the terminal acknowledges all the data transmitted.

8. Data system for connecting a wireless local area network to a UMTS terminal, comprising:
- a local area network (WLAN),
- a UMTS terminal (ME) which has USIM/USAT functionality and is suitable for setting up a connection to the local area network,
- means for monitoring the activity of the local area network, with said means being contained in the terminal,
- means for transmitting the type and/or the identity number of the local area network to the terminal, with the transmission taking place following successful detection of local area network activity,
- means for initiating a logical connection between the local area network and the terminal, and
- means for polling the specific subscriber data of the local area network.

9. Data system according to claim 8,
**characterised in that**
the terminal is suitable for polling the temporary status of the local area network and/or specific subscriber data of the local area network at periodic intervals.

10. Data system according to one of claims 8 or 9,
**characterised in that**
the specific subscriber data includes the data: type/identity number, subscriber identification, password, secret key for encrypting and decrypting data, and address of an access node.

11. Data system according to one of claims 8 to 10,
**characterised in that**
the terminal has a universal chip card (UICC) which initiates the monitoring of the activity of the local area network and the transmission of the data to the terminal.

12. Data system according to claim 11,
**characterised in that**
the terminal is suitable for notifying the universal chip card (UICC) of a deactivation of the local area network.

13. Data system according to claim 12,
**characterised in that**
the universal chip card (UICC) is suitable for initiating a cleardown of the logical connection between local area network and terminal.

14. Data system according to one of claims 8 to 13,
**characterised in that**
the terminal is suitable for acknowledging all the data transmitted.

15. Terminal, in particular mobile radio terminal device, for use with a method according to one of claims 1 to 7 or for use in a data system according to one of claims 8 to 14.

## Revendications

1. Procédé pour relier un réseau local sans fil (WLAN) à une station terminale UMTS (ME) avec fonctionnalité USIM/USAT, comportant les étapes suivantes :
- surveillance de l'activité du réseau local par la station terminale ;
- transmission du type et/ou du numéro d'identité du réseau local à la station terminale après que l'activité du réseau local a été détectée avec succès ;
- lancement d'une liaison logique entre le réseau local et la station terminale ; et
- interrogation des données spécifiques d'abonnés du réseau local.

2. Procédé selon la revendication 1, **caractérisé en ce que** le statut temporaire du réseau local et/ou des données spécifiques d'abonnés du réseau local sont interrogés à intervalles périodiques.

3. Procédé selon l'une des revendications précédentes, **caractérisé en ce que** les données spécifiques d'abonnés contiennent les données suivantes : numéro du type/d'identité, identification de l'abonné, mot de passe, clé secrète pour crypter et décrypter les données et adresse d'un noeud d'accès.

4. Procédé selon l'une des revendications précédentes, **caractérisé en ce que** la surveillance de l'activité du réseau local et la transmission des données à la station terminal sont initialisées par une carte à puce universelle (UICC) qui se trouve dans le terminal.

5. Procédé selon la revendication 4, **caractérisé en ce que** la station terminale communique une désactivation du réseau local à la carte à puce universelle (UICC).

6. Procédé selon la revendication 5, **caractérisé en ce que** la carte à puce universelle (UICC) initialise une fermeture de la liaison logique entre le réseau local et la station terminale.

7. Procédé selon l'une des revendications précédentes, **caractérisé en ce que** la station terminale acquitte toutes les données transmises.

8. Système de données pour relier un réseau local sans fil à une station terminale UMTS, comportant :
- un réseau local (WLAN) ;
- une station terminale UMTS (ME) avec fonctionnalité USIM/USAT adaptée pour se mettre en liaison avec le réseau local ;
- des moyens pour surveiller l'activité du réseau local, ces moyens se trouvant dans la station terminale ;
- des moyens pour envoyer à la station terminale le type et/ou le numéro d'identité du réseau local, l'émission ayant lieu après que l'activité du réseau local a été détectée avec succès ;
- des moyens pour lancer une liaison logique entre le réseau local et la station terminale ; et
- des moyens pour interroger les données spécifiques d'abonnés du réseau local.

9. Système de données selon la revendication 8, **caractérisé en ce que** la station terminale est adaptée pour interroger à intervalles périodiques le statut temporaire du réseau local et/ou des données spécifiques d'abonnés du réseau local.

10. Système de données selon l'une des revendications 8 ou 9, **caractérisé en ce que** les données spécifiques d'abonnés contiennent les données suivantes : numéro du type/d'identité, identification de l'abonné, mot de passe, clé secrète pour crypter et décrypter les données et adresse d'un noeud d'accès.

11. Système de données selon l'une des revendications 8 à 10, **caractérisé en ce que** la station terminale comporte une carte à puce universelle (UICC) qui initialise la surveillance de l'activité du réseau local et la transmission des données à la station terminale.

12. Système de données selon la revendication 11, **caractérisé en ce que** la station terminale est adaptée pour communiquer une désactivation du réseau local à la carte à puce universelle (UICC).

13. Système de données selon la revendication 12, **caractérisé en ce que** la carte à puce universelle (UICC) est adaptée pour initialiser une fermeture de la liaison logique entre le réseau local et la station terminale.

14. Système de données selon l'une des revendications 8 à 13, **caractérisé en ce que** la station terminale est adaptée pour acquitter toutes les données transmises.

15. Station terminale, en particulier terminal de téléphonie mobile, destinée à être utilisée avec un procédé selon l'une des revendications 1 à 7 ou à être utilisée dans un système de données selon l'une des revendications 8 à 14.
